# EUROPÄISCHE PATENTSCHRIFT

(11) **EP 1 906 153 B1**
(45) Veröffentlichungstag und Bekanntmachung des Hinweises auf die Patenterteilung: **23.09.2009**
(21) Anmeldenummer: 07012645.3
(22) Anmeldetag: 28.06.2007
(51) Int. Cl.: G01D 5/20

(54) **Drehgeber und Verfahren zu dessen Betrieb**
Rotary encoder and method for its operation
Encodeur et son procédé de fonctionnement

(30) Priorität: 29.09.2006 DE 102006046531
(43) Veröffentlichungstag der Anmeldung: 02.04.2008
(73) Patentinhaber: Dr. Johannes Heidenhain GmbH, 83301 Traunreut (DE)
(72) Erfinder: Tiemann, Marc Oliver, 83365 Nussdorf (DE)

(56) Entgegenhaltungen:
- EP-A- 0 845 659
- US-A1- 2003 093 907

## Beschreibung

Die Erfindung betrifft einen Drehgeber zur Bestimmung von Relativwinkelpositionen, welcher nach einem induktiven Messprinzip arbeitet, gemäß dem Anspruch 1 und ein entsprechendes Verfahren zum Betrieb eines derartigen Drehgebers gemäß dem Anspruch 11.

Induktive Drehgeber werden beispielsweise zur Bestimmung der Winkellage zweier relativ zueinander drehbaren Maschinenteile verwendet. Bei induktiven Drehgebern werden Erregerwindungen und Empfängerspulen etwa in Form von Leiterbahnen auf einer gemeinsamen Leiterplatte aufgebracht, die beispielsweise mit einem Stator eines Drehgebers fest verbunden ist. Dieser Leiterplatte gegenüber befindet sich eine weitere Platine, die nicht selten als Codescheibe ausgebildet ist, auf der in periodischen Abständen alternierend elektrisch leitfähige und nichtleitfähige Flächen als Teilungsbereich bzw. Teilungsstruktur aufgebracht sind, und welche mit dem Rotor des Drehgebers drehfest verbunden ist. Wenn an den Erregerwindungen durch einprägen eines Erregerstroms ein zeitlich wechselndes elektrisches Erregerfeld angelegt wird, werden in den Empfängerspulen während der Relativdrehung zwischen Rotor und Stator von der Winkellage abhängige Signale erzeugt. Diese Signale werden dann in einer Auswerteelektronik weiterverarbeitet.

Häufig werden solche Drehgeber als Messgeräte für elektrische Antriebe, zur Bestimmung der absoluten Winkellage von entsprechenden Antriebswellen, eingesetzt. Dabei ist es insbesondere unter sicherheitstechnischen Gesichtspunkten wichtig, dass auch nach einem Ausschalten des Systems oder bei einem Stromausfall zumindest die in diesem Zustand erfolgten Umdrehungen gezählt werden.

In der DE 197 51 853 A1 der Anmelderin wird ein Aufbau für einen induktiven Drehgeber beschrieben, bei dem die Erreger- und Empfängerspulen in einer mehrschichtigen Leiterplatten-Struktur angeordnet sind.

Damit ein derartiger Drehgeber auch bei fehlender Netzspannungsversorgung zumindest die Anzahl und Drehrichtung der zurückgelegten Umdrehungen zählen kann, wurden bisher weiterhin am Rotor entsprechende Magnete und an einer Statorleiterplatte zwei Magnetsensoren vorgesehen, welche Zählsignale erzeugen. Die Magnetsensoren wurden in diesem Betriebszustand von einer Pufferbatterie versorgt.

Der Erfindung liegt die Aufgabe zugrunde, einen induktiven Drehgeber zu schaffen, welcher einfach aufgebaut ist und durch den selbst bei reduzierter Zufuhr von elektrischer Energie Positionssignale erzeugbar sind. Ferner liegt der Erfindung die Aufgabe zugrunde ein Verfahren zu schaffen, das den Einsatz eines einfach aufgebauten Drehgebers ermöglicht, welcher selbst bei reduzierter Zufuhr von elektrischer Energie Positionssignale erzeugt.

Diese Aufgabe wird erfindungsgemäß durch die Merkmale des Anspruches 1 bzw. des Anspruches 11 gelöst.

Erfindungsgemäß umfasst der Drehgeber unter anderem eine Welle und einen Trägerkörper, an dem eine Erregerwindung und eine Detektoranordnung angeordnet sind. Durch die Erregerwindung ist zur Erzeugung eines elektromagnetischen Feldes ein Erregerstrom leitbar und die Detektoranordnung ist zur Abtastung des durch einen Codeträger beeinflussten elektromagnetischen Feldes geeignet. Ferner umfasst der Drehgeber ein Erregerkontrollelement und ein Auswerteelement. Die Welle ist relativ zum Trägerkörper drehbar, wobei an der Welle zur Erfassung ihrer Winkellage der Codeträger drehfest festgelegt ist. Das Erregerkontrollelement ist derart ausgestaltet, dass durch dieses die Erregerwindung selektiv in zwei verschiedenen Betriebsmodi betreibbar ist und zwar in einer Weise, dass im ersten Betriebsmodus ein erster Erregerstrom und im zweiten Betriebsmodus ein zweiter Erregerstrom erzeugbar ist, wobei der zweite Erregerstrom derart ausgestaltet ist, dass die elektrische Leistungsaufnahme des Drehgebers im zweiten Betriebsmodus kleiner ist als im ersten Betriebsmodus. Der jeweilige Erregerstrom induziert in der Detektoranordnung Spannungen die zur Erzeugung von Winkellageinformationen vom Auswerteelement elektronisch verarbeitbar sind.

Das Erregerkontrollelement ist insbesondere derart ausgestaltet, dass im ersten Betriebsmodus ein erster Erregerstrom und im zweiten Betriebsmodus ein zweiter Erregerstrom erzeugbar ist, wobei der Effektivwert des zweiten Erregerstroms kleiner ist als der des ersten Erregerstroms. Als Effektivwert des jeweiligen Erregerstromes ist derjenige Wert zu verstehen, durch den in der selben Erregerwindung die gleiche Energie dissipiert wird, wie ein gleich großer Gleichstrom in gleicher Zeit, wobei die Zeit selbstredend eine gewisse Mindestdauer überschreiten muss, beispielsweise eine Sekunde. Der Drehgeber kann im zweiten Betriebsmodus mit weniger elektrischer Energie betrieben werden als im ersten Betriebsmodus.

In weiterer Ausgestaltung der Erfindung weist die im zweiten Betriebsmodus erzeugte Winkellageinformation eine grobere Auflösung auf als die im ersten Betriebsmodus erzeugte Winkellageinformation. Das heißt, dass die Genauigkeit der Erfassung der Winkellage im zweiten Betriebsmodus gegenüber derjenigen im ersten Betriebsmodus reduziert ist.

Mit Vorteil umfasst die Detektoranordnung eine erste Detektorwindung und eine zweite Detektorwindung, wobei die erste Detektorwindung innerhalb einer Umdrehung relativ zum Trägerkörper eine gegenüber der zweiten Detektorwindung unterschiedliche Anzahl von Signalperioden liefert. Dabei ist es vorteilhaft, wenn die erste Detektorwindung eine ungeradzahlige Anzahl von Signalperioden liefert, insbesondere wenn die erste Detektorwindung nur eine Signalperiode während einer Umdrehung liefert.

Weiterhin ist es vorteilhaft, wenn die erste Detektorwindung innerhalb einer Umdrehung relativ zum Trägerkörper eine kleinere Anzahl von Signalperioden liefert als die zweite Detektorwindung.

In weiterer Ausgestaltung der Erfindung ist der Drehgeber so konfiguriert, dass zur Erzeugung von Winkellageinformationen im zweiten Betriebsmodus nur die in der ersten Detektorwindung induzierte Spannung detektierbar ist, während im ersten Betriebsmodus ergänzend dazu auch die induzierten Spannungen der zweiten Detektorwindung jeweils vom Auswerteelement elektronisch verarbeitbar sind. Demnach werden vom Auswerteelement zur Erzeugung von Winkellageinformationen im zweiten Betriebsmodus die in der ersten Detektorwindung induzierte Spannung elektronisch verarbeitet und gleichzeitig die in der zweiten Detektorwindung induzierte Spannung für die elektronischen Verarbeitung unberücksichtigt gelassen, das heißt, dass dann die in der zweiten Detektorwindung induzierte Spannung von der elektronischen Verarbeitung weggeschalten bzw. davon getrennt ist. Somit ist die zweite Detektorwindung im zweiten Betriebsmodus ohne Funktion für die Erzeugung von Winkellageinformationen. Im ersten Betriebsmodus werden dagegen sowohl die in der ersten Detektorwindung als auch die in der zweiten Detektorwindung induzierten Spannungen für die Erzeugung von Winkellageinformationen elektronisch verarbeitet.

Mit Vorteil können das Erregerkontrollelement und das Auswerteelement in einem ASIC-Baustein integriert sein.

In weiterer Ausgestaltung der Erfindung kann das Erregerkontrollelement derart ausgestaltet sein, dass der zweite Erregerstrom als ein gepulster Strom erzeugbar ist. Insbesondere kann der zweite Erregerstrom Strompausen aufweisen. Unter Strompausen sind Zeitbereiche zu verstehen, in denen der Erregerstrom praktisch auf Null zurückgeht.

Der Drehgeber selbst kann eine Batterie aufweisen zur Stromversorgung des Drehgebers im zweiten Betriebsmodus.

Des Weiteren betrifft die Erfindung ein Verfahren zum Betrieb eines derartigen Drehgebers mit den Schritten: Selektieren eines ersten oder zweiten Betriebsmodus; Erzeugen eines Erregerstroms in der Erregerwindung mit Hilfe des Erregerkontrollelements, wobei im ersten Betriebsmodus ein erster Erregerstrom und im zweiten Betriebsmodus ein zweiter Erregerstrom erzeugt werden, wobei der zweite Erregerstrom derart ausgestaltet wird, dass die elektrische Leistungsaufnahme des Drehgebers im zweiten Betriebsmodus kleiner ist als im ersten Betriebsmodus; Detektieren der durch den jeweiligen Erregerstrom in der Detektoranordnung induzierten Spannung; elektronische Verarbeitung der induzierten Spannung zur Erzeugung von Winkellageinformationen.

Insbesondere werden die Erregerströme in der Weise erzeugt, dass der Effektivwert des zweiten Erregerstroms kleiner ist als der des ersten Erregerstroms.

Mit Vorteil wird dabei der erste oder der zweite Betriebsmodus in Abhängigkeit von der am Drehgeber anliegenden Spannung selektiert. Als Kriterien können hierzu etwa die Höhe des tatsächlich anliegenden Spannungspegels herangezogen werden, oder beispielsweise der jeweils vorliegende Spannungsverlauf (z. B. Gleichspannung - Wechselspannung).

Der Erregerstrom im zweiten Betriebsmodus ist vorteilhafterweise so ausgestaltet, dass der zeitliche Abstand zwischen benachbarten Strommaxima mindestens 100-mal, mit Vorteil mindestens 1000-mal oder mindestens 2500-mal größer ist als der zeitliche Abstand benachbarter Strommaxima im ersten Betriebsmodus. Der Erregerstrom erreicht ein Strommaximum, wenn dieser seine Maximalamplitude aufweist. Der Begriff Strommaximum kann betragsmäßig zu verstehen sein, so dass in diesem Fall ein Strommaximum auch bei einem betragsmäßig maximalen negativen Strom vorliegt. Sofern der Erregerstrom kein ausgeprägtes singuläres Maximum aufweist, z. B. wenn Rechteckimpulse vorliegen bei denen das Strommaximum über eine gewisse Zeit konstant bleibt, so ist für die oben genannten zeitlichen Abstände der zeitliche Mitte des Strommaximums zu verstehen, z. B. der Zeitpunkt, welcher zwischen den Flanken eines Rechteckpulse liegt.

In weiterer Ausgestaltung der Erfindung umfasst die Detektoranordnung eine erste Detektorwindung und eine zweite Detektorwindung, wobei die erste Detektorwindung innerhalb einer Umdrehung relativ zum Trägerkörper eine gegenüber der zweiten Detektorwindung unterschiedliche Anzahl von Signalperioden liefert, und im zweiten Betriebsmodus nur die in der ersten Detektorwindung induzierte Spannung detektiert und zur Erzeugung von Winkellageinformationen verarbeitet wird. Weiterhin kann dann im ersten Betriebsmodus auch die in der zweiten Detektorwindung induzierte Spannung detektiert und zur Erzeugung von Winkellageinformationen verarbeitet werden.

Vorteilhafte Ausbildungen der Erfindung entnimmt man den abhängigen Ansprüchen.

Weitere Einzelheiten und Vorteile des erfindungsgemäßen induktiven Drehgebers, sowie des Verfahrens zu dessen Betrieb ergeben sich aus der nachfolgenden Beschreibung eines Ausführungsbeispiels anhand der beiliegenden Figuren.

Es zeigen die
- Figur 1: eine Draufsicht auf eine Codescheibe,
- Figur 2: eine Draufsicht auf eine Abtastleiterplatte,
- Figur 3a: einen Signalverlauf des Erregerstroms in den Erregerwindungen in einem ersten Betriebsmodus,
- Figur 3b: einen Signalverlauf der induzierten Spannung in Detektorwindungen im ersten Betriebsmodus,
- Figur 4a: einen Signalverlauf des Erregerstroms in den Erregerwindungen in einem zweiten Betriebsmodus,
- Figur 4b: einen Signalverlauf der induzierten Spannung in einer Detektorwindung im zweiten Betriebsmodus (0° Phase)
- Figur 4c: einen signalverlauf der induzierten Spannung in einer Detektorwindung im zweiten Betriebsmodus (90° Phase)
- Figur 5: ein schematisches Schaltbild,
- Figur 6: eine Schnittdarstellung eines Drehgebers.

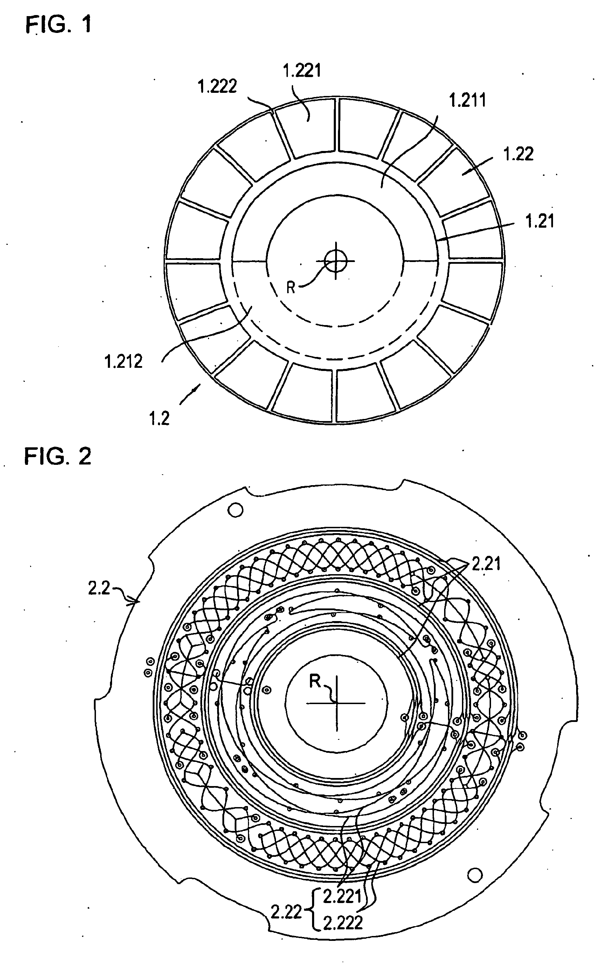

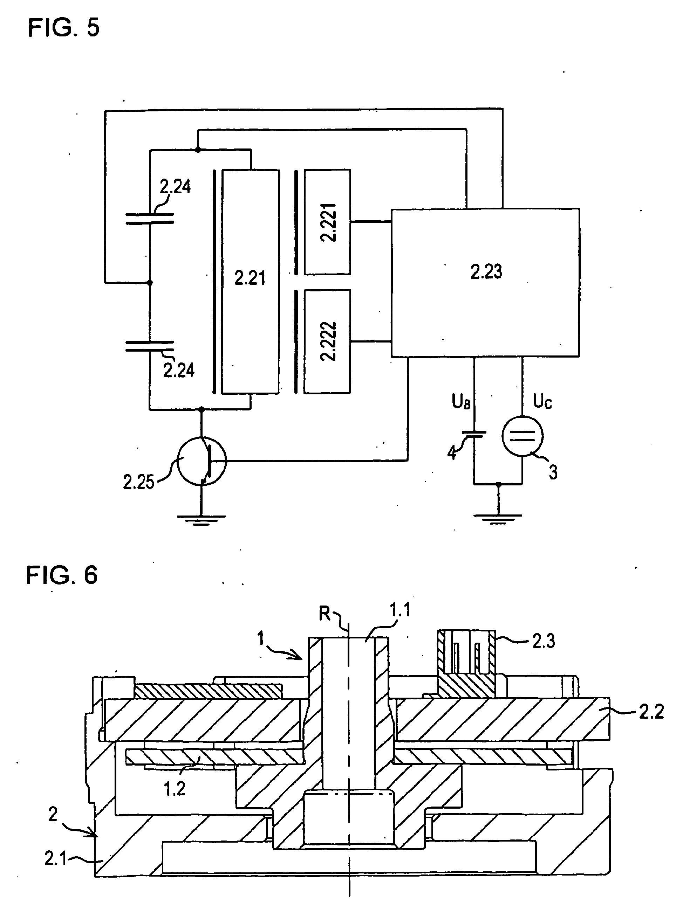

In den Figuren 1, 2 und 6 ist der prinzipielle Aufbau eines erfindungsgemäßen Drehgebers gezeigt. Gemäß der Figur 6 weist der Drehgeber einen Rotor 1 und einen Stator 2 auf. Im vorgestellten Ausführungsbeispiel umfasst der Rotor 1 eine Welle 1.1, welche beispielsweise an einer zu messenden Motorwelle drehfest montiert werden kann. An einem Absatz der Welle 1.1 ist zur Erfassung ihrer Winkellage der Codeträger in Form einer Codescheibe 1.2 mit - in der Figur 6 nicht dargestellten - Teilungsspuren 1.21, 1.22 drehfest festgelegt.

Der Stator 2 umfasst ein Gehäuse 2.1, an dem als Trägerkörper eine ringförmige Abtastleiterplatte 2.2 befestigt ist. Unter anderem ist auf der Abtastleiterplatte 2.2 ein Steckverbinder 2.3 montiert, durch welchen Signale und elektrische Leistung übertragen werden können. Der Rotor 1 und der Stator 2, bzw. die Welle 1.1 und das Gehäuse 2.1 sind um ein Drehachse R relativ zueinander drehbar.

In der Figur 1 ist die Codescheibe 1.2 in einer Draufsicht gezeigt. Die Codescheibe 1.2 besteht aus einem Substrat, welches im dargestellten Ausführungsbeispiel aus Epoxydharz hergestellt ist und auf dem zwei Teilungsspuren 1.21, 1.22 angeordnet sind. Die Teilungsspuren 1.21, 1.22 sind ringförmig ausgebildet und bezüglich der Drehachse R konzentrisch mit unterschiedlichem Durchmesser auf dem Substrat angeordnet. Die beiden Teilungsspuren 1.21, 1.22 bestehen jeweils aus einer periodischen Abfolge von alternierend angeordneten elektrisch leitfähigen Teilungsbereichen 1.211, 1.221 und nichtleitfähigen Teilungsbereichen 1.212, 1.222. Als Material für die elektrisch leitfähigen Teilbereiche 1.211, 1.221 wurde im gezeigten Beispiel Kupfer auf das Substrat aufgebracht. In den nichtleitfähigen Teilungsbereichen 1.212, 1.222 wurde das Substrat 2.3 dagegen nicht beschichtet.

Die innere Teilungsspur 1.21 besteht in der dargestellten Ausführungsform aus einem ersten halbringförmigen Teilungsbereich 1.211 mit elektrisch leitfähigem Material, hier Kupfer, sowie einem zweiten halbringförmigen Teilungsbereich 1.212, in dem kein leitfähiges Material angeordnet ist.

Radial benachbart zur ersten Teilungsspur 1.21 liegt die zweite Teilungsspur 1.22 auf dem Substrat, wobei auch die Teilungsspur 1.22 aus einer Vielzahl elektrisch leitfähiger Teilungsbereiche 1.221 sowie dazwischen angeordneten nichtleitfähigen Teilungsbereichen 1.222 besteht. Die verschiedenen Teilungsbereiche 1.221, 1.222 sind materialmäßig dabei ebenso ausgebildet wie die Teilungsbereiche 1.211, 1.212 der ersten Teilungsspur 1.21. Insgesamt umfasst die zweite Teilungsspur 1.22 im dargestellten Ausführungsbeispiel sechzehn periodisch angeordnete, elektrisch leitfähige Teilungsbereiche 1.221 sowie entsprechend sechzehn dazwischen angeordnete nichtleitfähige Teilungsbereiche 1.222.

Die in Figur 2 gezeigte, zur Abtastung der Codescheibe 1.2 vorgesehene Abtastleiterplatte 2.2 dient als Trägerkörper unter anderem für eine Detektoranordnung, welche hier aus verschiedenen Empfängerspulen 2.22 besteht. Diese Empfängerspulen 2.22 weisen als erste Detektorwindungen in einer inneren Empfängerspur Empfängerleiterbahnen 2.221 und als zweite Detektorwindungen in einer äußeren Empfängerspur weitere Empfängerleiterbahnen 2.222 auf. Zusammengehörige Paare der Empfängerleiterbahnen 2.221, 2.222 einer jeweiligen Empfängerspur sind hierbei relativ zueinander versetzt, so dass diese um 90° phasenversetzte Signale liefern können.

Darüber hinaus sind als Erregerwindungen an der Abtastleiterplatte 2.2 Erregerleiterbahnen 2.21 vorgesehen, welche auf einer inneren, einer mittleren und einer äußeren Erregerspur aufgebracht sind. Die Abtastleiterplatte 2.2 selbst weist eine zentrische Bohrung auf und ist als eine Leiterplatte, welche mehrere Lagen aufweist, ausgeführt.

Im zusammengebauten Zustand stehen sich die Codescheibe 1.2 und die Abtastleiterplatte 2.2 gegenüber, so dass die Achse R durch die Mittelpunkte beider Elemente verläuft und bei einer Relativdrehung zwischen Codescheibe 1.2 und Abtastleiterplatte 2.2 in der Abtastleiterplatte 2.2 ein von der jeweiligen Winkelstellung abhängiges Signal durch Induktionseffekte erzeugbar ist.

Vorraussetzung für die Bildung von entsprechenden Signalen ist, dass die Erregerleiterbahnen 2.21 ein zeitlich wechselndes elektromagnetisches Erregerfeld im Bereich der Abtastspuren bzw. im Bereich der damit abgetasteten Teilungsspuren 1.21 und 1.22 erzeugen. Im dargestellten Ausführungsbeispiel sind die Erregerleiterbahnen 2.21 als mehrere planar-parallele stromdurchflossene Einzel-Leiterbahnen ausgebildet. Werden die Erregerleiterbahnen 2.21 einer Leiterbahneinheit allesamt in der gleichen Richtung von einem Erregerstrom durchflossen, so bildet sich um die jeweilige Leiterbahneinheit ein schlauch- bzw. zylinderförmig orientiertes elektromagnetisches Feld aus. Die Feldlinien des resultierenden elektromagnetischen Feldes verlaufen in Form konzentrischer Kreise um die Leiterbahneinheiten, wobei die Richtung der Feldlinien in bekannter Art und Weise von der Stromrichtung in den Leiterbahneinheiten abhängt. Die Stromrichtung der unmittelbar an eine gemeinsame Abtastspur angrenzenden Leiterbahneinheiten bzw. die entsprechende Verschaltung dieser Leiterbahneinheiten ist dabei entgegengesetzt zu wählen, so dass die Feldlinien im Bereich der Abtastspuren jeweils identisch orientiert sind.

In der Figur 5 ist schematisch ein Schaltkreis dargestellt, anhand dessen die Funktionsweise des Drehgebers erläutert werden soll. Der Drehgeber ist über den Steckverbinder 2.3 (Figur 6) und ein Kabel mit einer externen Gleichspannungsquelle 3 verbunden. Im Normalbetrieb wird der Drehgeber von der externen Gleichspannungsquelle 3 versorgt. Im dargestellten Ausführungsbeispiel beträgt die Spannung U_{C} der Gleichspannungsquelle 3 fünf Volt.

Für den Fall, dass aus irgendeinem Grund die Gleichspannungsquelle 3 nicht zur Verfügung steht, wird der Drehgeber vorübergehend durch eine Batterie 4 mit elektrischer Energie versorgt, wobei hier die von der Batterie 4 abgegeben Spannung beispielsweise drei Volt betragen kann. Die Batterie 4 kann entweder direkt im Drehgeber, beispielsweise auf der Abtastleiterplatte 2.2 untergebracht sein, oder extern, so dass auch die von der Batterie 4 gelieferte elektrische Energie über das Kabel und den Steckverbinder 2.3 in den Drehgeber gelangen kann.

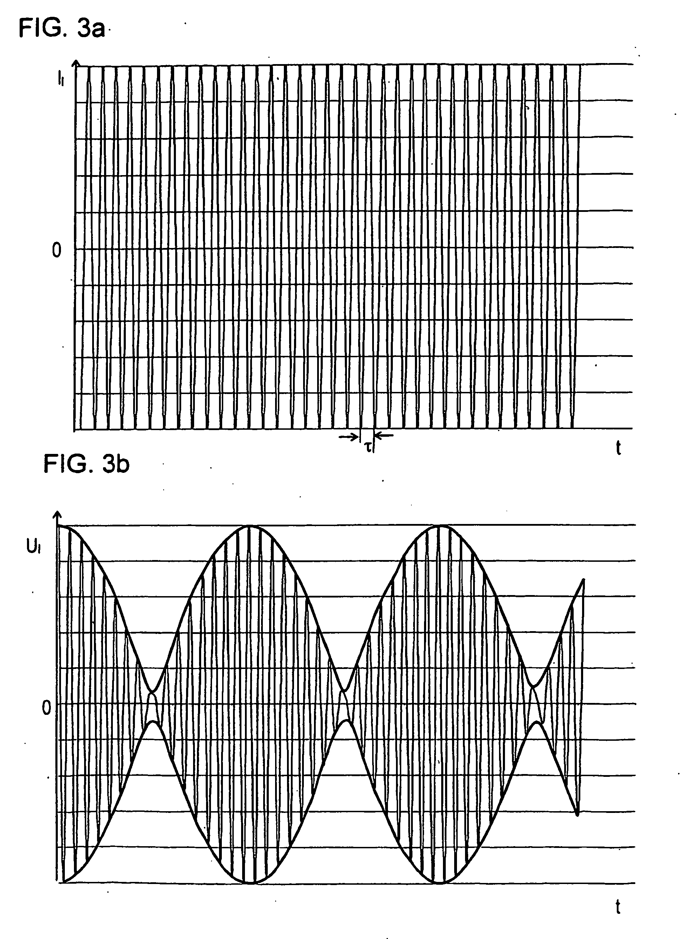

Auf der Abtastleiterplatte 2.2 ist ein ASIC-Baustein 2.23 montiert, welcher als Erregerkontrollelement arbeitet, unter dessen Kontrolle der Erregerstrom I_{I}, I_{II} erzeugt wird. Wie dieser Erregerstrom I_{I}, I_{II} ausgestaltet ist, hängt davon ab, ob der Drehgeber durch die Gleichspannungsquelle 3 oder durch die Batterie 4 versorgt wird. Entsprechend ist der ASIC-Baustein 2.23 mit der Versorgungsleitung verbunden, so dass an einem Eingang des ASIC-Bausteins 2.23 die aktuell vorliegende Spannung U_{C} oder U_{B} anliegt. Sofern vom ASIC-Baustein 2.23 festgestellt wird, dass am Drehgeber die Spannung U_{C} anliegt, sich also der Drehgeber im Normalbetrieb befindet, treibt der ASIC-Baustein 2.23 die Erregerleiterbahnen 2.21 in einem ersten Betriebsmodus mit einem ersten Erregerstrom I_{I}. Im ersten Betriebsmodus weist der Erregerstrom I_{I} im vorgestellten Ausführungsbeispiel eine Frequenz von einem MHz auf, so dass der zeitliche Abstand τ_{I} zwischen benachbarten Strommaxima im ersten Betriebsmodus 1 µs beträgt. Entsprechend sind die Kondensatoren 2.24 und die Erregerleiterbahnen 2.21, die einen elektrischen Schwingkreis bilden, dimensioniert. Der ASIC-Baustein 2.23 ist so konfiguriert, dass dem Schwingkreis bei jedem Nulldurchgang des Erregerstroms I_{I} ein minimaler Strompuls zugeführt wird, der so bemessen ist, dass gerade die Verluste im Schwingkreis kompensiert werden. Demgemäß kann der Erregerstrom I_{I} im ersten Betriebsmodus, wie in der Figur 3a dargestellt, als ein periodischer Erregerstrom I_{I} bezeichnet werden, wobei im vorgestellten Ausführungsbeispiel dessen Maximalamplitude einen Wert von +70 mA bzw. -70 mA aufweist.

Durch den ersten Erregerstrom I_{I} werden in den Empfängerspulen 2.22, also in den Empfängerleiterbahnen 2.221, 2.222 Spannungen U_{I} in Abhängigkeit von der Winkelstellung der Codescheibe 1.2 induziert. Die Empfängerleiterbahnen 2.221 umfassen zwei Leiterbahnen, die um 90° versetze Spannungssignale liefern. Innerhalb einer Umdrehung relativ zum Trägerkörper, also bei einem Drehwinkel von 2π (360°), liefern die Empfängerleiterbahnen 2.221 jeweils eine einzige Signalperiode bei der Abtastung der Teilungsspur 1.21. Durch die versetzte Anordnung der Leiterbahnen im Bereich der Empfängerleiterbahnen 2.221 entstehen im Betrieb des Drehgebers zwei induzierte Spannungen U_{I}, deren Einhüllende einen Phasenversatz von 90° zueinander aufweisen.

Aus der Abtastung der Teilungsspur 1.21 resultiert also eine relativ grobe, absolute Positionsinformation innerhalb einer Umdrehung der Codescheibe 1.2 um die Drehachse R. Diese Signale liefern ein eindeutiges absolutes Positionssignal innerhalb einer Umdrehung einer Welle 1.1. Durch eine Auswertung der um 90° phasenversetzten Signale ist zudem eine Richtungserkennung der Drehbewegung gewährleistet.

Die weiteren Empfängerleiterbahnen 2.222 auf der zweiten, äußeren Abtastspur dienen zur Abtastung der zweiten Teilungsspur 1.22. Zwischen den beiden Empfängerleiterbahnen 1.7, 1.8 ist ebenfalls ein Relativ-Versatz vorgesehen, so dass ausgangsseitig bei der Abtastung der zweiten Teilungsspur 1.22 zwei Signale entstehen, zwischen deren Einhüllenden ein 90° Phasenversatz besteht.

Die äußeren Empfängerleiterbahnen 2.222 weisen jeweils sechzehn, also 2⁴, Windungen auf, so dass mit den äußeren Empfängerleiterbahnen 2.222 ein vergleichsweise hoch auflösendes Inkrementalsignal bei der Relativbewegung der Codescheibe 1.2 gegenüber der Abtastleiterplatte 2.2 erzeugt werden kann. Innerhalb einer Umdrehung relativ zum Trägerkörper, also bei einem Drehwinkel von 2π (360°), liefern die Empfängerleiterbahnen 2.222 jeweils sechzehn Signalperioden bei der Abtastung der Teilungsspur 1.22.

In Verbindung mit der groben absoluten Positionsbestimmung über die erste Teilungsspur 1.21 ist über eine derartige Anordnung eine hochauflösende absolute Drehwinkelbestimmung möglich.

In der Figur 3b ist ein zeitlicher Verlauf der Spannungen U_{I} in einer der Empfängerleiterbahnen 2.221 dargestellt, sowie die beiden einhüllenden sinusförmigen Kurven. In Kombination mit den induzierten Spannungen U_{I} der restlichen Empfängerleiterbahnen 2.221, 2.222 können durch ein Demodulationsverfahren entsprechende sinusförmige Signale gebildet werden, durch welche die exakte Winkellage der Welle 1.1 bestimmt werden kann. Dabei werden die induzierten Spannungen U_{I} vom ASIC-Baustein 2.23, der nun gleichzeitig als Auswerteelement dient, elektronisch in der Weise verarbeitet, dass eine entsprechende Winkellageinformation für die Welle 1.1 erzeugt wird. Demnach sind also das Erregerkontrollelement und das Auswerteelement in einem einzigen ASIC-Baustein integriert.

In Folge der hohen Frequenz der Erregerstroms I_{I} ist es möglich, dass praktisch jederzeit die aktuelle Winkellageinformation vom Drehgeber abgerufen werden kann. Zusätzlich ist ein Zählen ganzer Umdrehungen möglich.

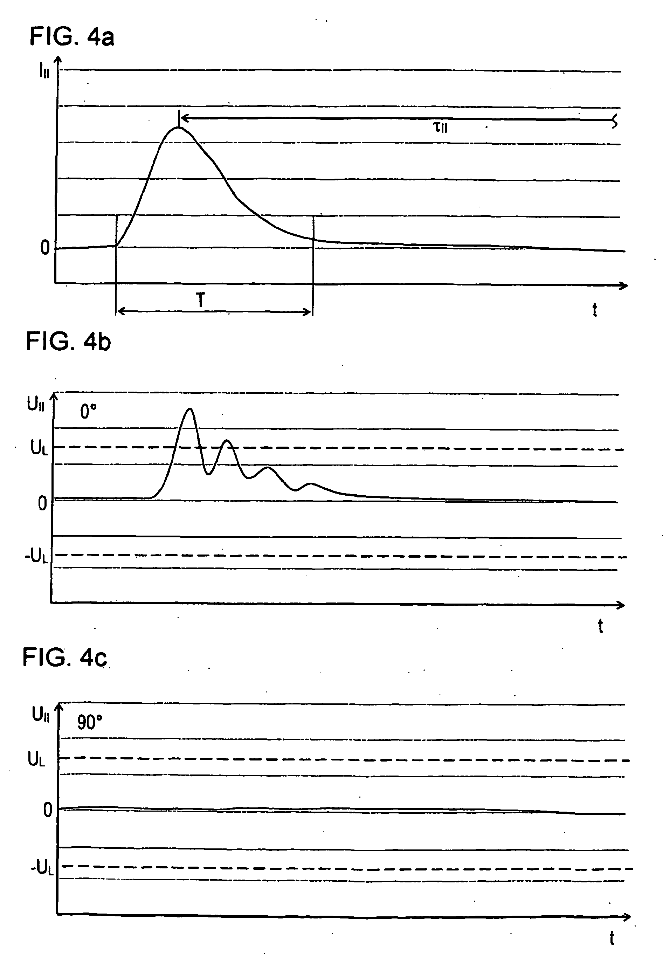

Falls nun, zum Beispiel auf Grund eines Stromausfalles, die Gleichspannungsquelle 3 nicht zur Verfügung steht, liegt die Spannung U_{B} der Batterie 4 am Drehgeber an. Dies erkennt der ASIC-Baustein 2.23 und selektiert daraufhin den zweiten Betriebsmodus, so dass der ASIC-Baustein 2.23 die Erregerleiterbahnen 2.21 nunmehr den wesentlich Strom sparenderen zweiten Betriebsmodus treibt, wobei der Effektivwert des zweiten Erregerstroms I_{II} kleiner ist als der des ersten Erregerstroms I_{I}. Im zweiten Betriebsmodus wird ein gepulster Erregerstrom I_{II} erzeugt, gemäß der Figur 4a. Das heißt, dass in Folge der Kontrolle des ASIC-Bausteins 2.23 Strompulse mit einer Frequenz von beispielsweise 200 Hz in die Erregerleiterbahnen 2.21 eingeprägt werden, so dass der zeitliche Abstand τ_{II} zwischen benachbarten Strommaxima im zweiten Betriebsmodus 0,005 s beträgt. Somit ist im zweiten Betriebsmodus der zeitliche Abstand τ_{II} zwischen benachbarten Strommaxima 5000-mal größer als der zeitliche Abstand τ_{I} benachbarter Strommaxima I_{I} im ersten Betriebsmodus. Zwischen den Pulsen liegt im zweiten Betriebsmodus jeweils eine Strompause, in welcher der Wert des Erregerstroms I_{II} im zweiten Betriebsmodus praktisch gleich Null ist. Durch die vergleichsweise niedrige Frequenz und die geringe Pulszeit (z. B. T = 1 µs), sowie eine niedrige Stromamplitude (z. B. Maximalamplitude = 20 mA) wird im zweiten Betriebsmodus der Strombedarf des Drehgebers im Vergleich zum dem des ersten Betriebsmodus signifikant reduziert, bzw. ist die elektrische Leistungsaufnahme, also der Bedarf des Drehgebers an elektrischer Energie bezogen auf eine Betriebssekunde, im zweiten Betriebsmodus wesentlich kleiner als im ersten Betriebsmodus. Im zweiten Betriebsmodus und im ersten Betriebsmodus werden dieselben Erregerleiterbahnen 2.21 vom zweiten Erregerstrom I_{II} bzw. vom ersten Erregerstrom I_{I} durchflossen.

Der gepulste Erregerstrom I_{II} induziert in Abhängigkeit von der Winkelstellung der Codescheibe 1.2 in den Empfängerleiterbahnen 2.221 eine Spannung U_{II} (Antwortpuls). Die Empfängerleiterbahnen 2.221 umfassen, wie bereits beschrieben, zwei Leiterbahnen, die im Ergebnis um 90° versetze Spannungssignale liefern. In der Figur 4b ist beispielsweise der zeitliche Verlauf der Spannung U_{II} gezeigt, wie er in der ersten der Empfängerleiterbahnen 2.221 (z. B. 0° Phase) induziert wird. Der als Auswerteelement arbeitende ASIC-Baustein 2.23 stellt fest, dass die Spannung U_{II} (0°) einen Schwellwert U_{L} überschritten hat. Gleichzeitig wird auch festgestellt, dass die in der zweiten der Empfängerleiterbahnen 2.221 (z. B. 90° Phase) induzierte Spannung U_{II} (90°) den Schwellwert U_{L} nicht erreicht hat.

Diese Eingangsbedingungen werden vom ASIC-Baustein 2.23 als Auswerteelement derart elektronisch verarbeitet, dass eine Winkellageinformation erzeugt wird. Die im zweiten Betriebsmodus erzeugte Winkellageinformation ist vergleichsweise grob, bzw. ungenau. Es kann aber immerhin festgestellt werden, welchem Quadranten die Winkellage der Welle 1.1 zuzuordnen ist. Dies ist beispielsweise dann wichtig, wenn durch eine hängende Last die Motorwelle ungesteuert weiterbewegt wird. Denn dann kann im zweiten Betriebsmodus zumindest festgestellt werden wie viele Umdrehungen die Welle 1.1 zurückgelegt hat und in welcher Richtung. Entsprechend kann die Umdrehungsanzahl auch bei ausgefallener Gleichspannungsquelle 3 gezählt werden, so dass die Umdrehungszahl nicht verloren geht.

Abhängig von der Stellung der Codescheibe 1.2 kann die induzierte Spannung U_{II} auch den unteren Schwellwert -U_{L} unterschreiten. Somit wird für jede Phase unterscheiden, ob U_{II} ≥ U_{L}, -U_{L} < U_{II} < +U_{L} oder U_{II} ≤ U_{L} ist. Entsprechend kann für die Lage der Welle 1.1 eine eindeutige Quadrantenzuordnung vorgenommen werden.

## Patentansprüche

1. Drehgeber umfassend
- eine Welle (1.1),
- einen Trägerkörper (2.2), an dem
• mindestens eine Erregerwindung (2.21), durch welche zur Erzeugung eines elektromagnetischen Feldes ein Erregerstrom (I_{I}, I_{II}) leitbar ist, sowie
• mindestens eine Detektoranordnung (2.22) zur Abtastung des durch einen Codeträger (1.2) beeinflussten elektromagnetischen Feldes angeordnet sind,
- ein Erregerkontrollelement (2.23) und
- ein Auswerteelement (2.23), wobei
die Welle (1.1) relativ zum Trägerkörper (2.2) drehbar ist und an der Welle (1.1) zur Erfassung ihrer Winkellage der Codeträger (1.2) drehfest festgelegt ist, wobei
das Erregerkontrollelement (2.23) derart ausgestaltet ist, dass durch dieses die Erregerwindung (2.21) selektiv in zwei verschiedenen Betriebsmodi betreibbar ist, in einer Weise, dass im ersten Betriebsmodus ein erster Erregerstrom (I_{I}) und im zweiten Betriebsmodus ein zweiter Erregerstrom (I_{II}) erzeugbar ist, wobei der zweite Erregerstrom (I_{II}) derart ausgestaltet ist, dass die elektrische Leistungsaufnahme des Drehgebers im zweiten Betriebsmodus kleiner ist als im ersten Betriebsmodus, und
der jeweilige Erregerstrom (I_{I}, I_{II}) in der Detektoranordnung (2.22) Spannungen (U_{I}, U_{II}) induziert, die zur Erzeugung von Winkellageinformationen vom Auswerteelement (2.23) elektronisch verarbeitbar sind.

2. Drehgeber gemäß dem Anspruch 1, wobei die im zweiten Betriebsmodus erzeugte Winkellageinformation eine grobere Auflösung aufweist als die im ersten Betriebsmodus erzeugte Winkellageinformation.

3. Drehgeber gemäß dem Anspruch 1 oder 2, wobei die Detektoranordnung (2.22) eine erste Detektorwindung (2.221) und eine zweite Detektorwindung (2.222) umfasst und die erste Detektorwindung (2.221) innerhalb einer Umdrehung relativ zum Trägerkörper (2.2) eine gegenüber der zweiten Detektorwindung (2.222) unterschiedliche Anzahl von Signalperioden liefert.

4. Drehgeber gemäß dem Anspruch 3, wobei die erste Detektorwindung (2.221) eine ungeradzahlige Anzahl von Signalperioden liefert.

5. Drehgeber gemäß dem Anspruch 4, wobei die erste Detektorwindung (2.221) innerhalb einer Umdrehung relative zum Trägerkörper (2.2) eine kleinere Anzahl von Signalperioden liefert als die zweite Detektorwindung (2.222).

6. Drehgeber gemäß einem der Ansprüche 3 bis 5, wobei vom Auswerteelement (2.23) zur Erzeugung von Winkellageinformationen
- im zweiten Betriebsmodus die in der ersten Detektorwindurtg (2.221) induzierte Spannung (U_{II}) elektronisch verarbeitbar ist und gleichzeitig die in der zweiten Detektorwindung (2.222) induzierte Spannung (U_{II}) für die elektronischen Verarbeitung unberücksichtigbar ist und
- im ersten Betriebsmodus sowohl die in der ersten Detektorwindung (2.221) als auch die in der zweiten Detektorwindung (2.222) induzierten Spannungen (U_{I}) elektronisch verarbeitbar sind.

7. Drehgeber gemäß einem der vorhergehenden Ansprüche, wobei das Erregerkontrollelement (2.23) und das Auswerteelement (2.23) in einem ASIC-Baustein integriert sind.

8. Drehgeber gemäß einem der vorhergehenden Ansprüche, wobei das Erregerkontrollelement (2.23) derart ausgestaltet ist, dass der zweite Erregerstrom I_{II} als ein gepulster Strom erzeugbar ist.

9. Drehgeber gemäß einem der vorhergehenden Ansprüche, wobei das Erregerkontrollelement (2.23) derart ausgestaltet ist, dass der zweite Erregerstrom (I_{II}) Strompausen aufweist.

10. Drehgeber gemäß einem der vorhergehenden Ansprüche, wobei der Drehgeber eine Batterie aufweist, zur Stromversorgung des Drehgebers im zweiten Betriebsmodus.

11. Verfahren zum Betrieb eines Drehgebers, der
- eine Welle (1.1),
- einen Trägerkörper (2.2), an dem
• mindestens eine Erregerwindung (2.21) durch welche zur Erzeugung eines elektromagnetischen Feldes ein Erregerstrom (I_{I}, I_{II}) geleitet wird, sowie
• mindestens eine Detektoranordnung (2.22) zur Abtastung des durch einen Codeträger (1.2) beeinflussten elektromagnetischen Feldes angeordnet sind,
- ein Erregerkontrollelement (2.23) und
- ein Auswerteelement (2.23) umfasst, wobei
die Welle (1.1) relativ zum Trägerkörper (2.2) drehbar ist und an der Welle (1.1) zur Erfassung ihrer Winkellage der Codeträger (1.2) drehfest festgelegt ist, mit folgenden Schritten
◆ Selektieren eines ersten oder zweiten Betriebsmodus,
◆ Erzeugen eines Erregerstroms (I_{I}, I_{II}) in der Erregerwindung (2.21) mit Hilfe des Erregerkontrollelements (2.23), wobei im ersten Betriebsmodus ein erster Erregerstrom (I_{I}) und im zweiten Betriebsmodus ein zweiter Erregerstrom (I_{II}) erzeugt werden, wobei der zweite Erregerstrom (I_{II}) derart ausgestaltet wird, dass die elektrische Leistungsaufnahme des Drehgebers im zweiten Betriebsmodus kleiner ist als im ersten Betriebsmodus,
◆ Detektieren der durch den Erregerstrom (I_{I}, I_{II}) in der Detektoranordnung (2.22) induzierten Spannung (U_{I} U_{II}).
◆ elektronische Verarbeitung der induzierten Spannung (U_{II}, U_{I}) zur Erzeugung von Winkellageinformationen.

12. Verfahren gemäß dem Anspruch 11, wobei die im zweiten Betriebsmodus erzeugte Winkellageinformation eine grobere Auflösung aufweist als die im ersten Betriebsmodus erzeugte Winkellageinformation.

13. Verfahren gemäß dem Anspruch 11 oder 12, wobei der erste oder der zweite Betriebsmodus in Abhängigkeit von der am Drehgeber anliegenden Spannung (U_{B}, U_{C}) selektiert wird.

14. Verfahren gemäß einem der Ansprüche 11 bis 13, wobei der zweite Erregerstrom (I_{II}) als ein gepulster Strom erzeugt wird.

15. Verfahren gemäß einem der Ansprüche 11 bis 14, wobei der zweite Erregerstrom (I_{II}) Strompausen aufweist.

16. Verfahren gemäß einem der Ansprüche 11 bis 15, wobei der zweite Erregerstrom (I_{II}) so ausgestaltet wird, dass der zeitliche Abstand (τ_{II}) zwischen benachbarten Strommaxima mindestens 100-mal größer ist als der zeitliche Abstand (τ_{I}) benachbarter Strommaxima des ersten Erregerstroms (I_{I}).

17. Verfahren gemäß dem Anspruch 16, wobei der zweite Erregerstrom (I_{II}) so ausgestaltet wird, dass der zeitliche Abstand (τ_{II}) zwischen benachbarten Strommaxima mindestens 1000-mal größer ist als der zeitliche Abstand (τ_{I}) benachbarter Strommaxima des ersten Erregerstroms (I_{I}).

18. Verfahren gemäß einem der Ansprüche 11 bis 17, wobei die Detektoranordnung (2.22) eine erste Detektorwindung (2.221) und eine zweite Detektorwindung (2.222) umfasst und die erste Detektorwindung (2.221) innerhalb einer Umdrehung relativ zum Trägerkörper (2.2) eine gegenüber der zweiten Detektorwindung (2.222) unterschiedliche Anzahl von Signalperioden liefert,
- wobei im zweiten Betriebsmodus die in der ersten Detektorwindung (2.221) induzierte Spannung (U_{II}) elektronisch verarbeitet wird und gleichzeitig die in der zweiten Detektorwindung (2.222) induzierte Spannung (U_{II}) von der elektronischen Verarbeitung unberücksichtigt wird und
- im ersten Betriebsmodus sowohl die in der ersten Detektorwindung (2.221) als auch die in der zweiten Detektorwindung (2.222) induzierten Spannungen (U_{I}) elektronisch verarbeitet werden.

19. Verfahren gemäß einem der Ansprüche 11 bis 18, wobei der erste Erregerstrom (I_{I}) eine höhere Maximalamplitude aufweist als der zweite Erregerstrom (I_{II}).

## Claims

1. A rotary transducer comprising
- a shaft (1.1),
- a support body (2.2) on which
• at least one exciter coil (2.21), through which a field current (I_{I}, I_{II}) can be conducted for generating an electromagnetic field as well as
• at least one detector arrangement (2.22) for scanning the electromagnetic field, which is impacted by a code carrier (1.2), are arranged,
- an exciter control element(2.23) and
- an evaluation element (2.23), wherein
the shaft (1.1) is rotatable relative to the support body (2.2) and the code carrier (1.2) is fixed to the shaft (1.1) in a torque proof way for detecting the angular position thereof, wherein
the exciter control element (2.23) is embodied in such a manner that the exciter coil (2.21) can be operated selectively in two different operating modes by means of said exciter control element (2.23) in such a manner that a first field current (I_{I}) can be generated in the first operating mode and that a second field current (I_{II}) can be generated in the second operating mode, wherein the second field current (I_{II}) is embodied in such a manner that the electrical current consumption of the rotary transducer in the second operating mode is less than in the first operating mode and
the respective field current (I_{I}, I_{II}) induces voltages (U_{I}, U_{II}) in the detector arrangement (2.22), said voltages being capable of being processed electronically for generating angular position information of evaluation elements (2.23).

2. The rotary transducer according to claim 1, wherein the angular position information generated in the second operating mode encompasses a coarser resolution than the angular position information generated in the first operating mode.

3. The rotary transducer according to claim 1 or 2, wherein the detector arrangement (2.22) comprises a first detector coil (2.221) and a second detector coil (2.222) and the first detector coil (2.221), within a rotation relative to the support body (2.2), supplies a number of signal periods, which is different as compared to the second detector coil (2.222).

4. The rotary transducer according to claim 3, wherein the first detector coil (2.221) supplies an uneven number of signal periods.

5. The rotary transducer according to claim 4, wherein the first detector coil (2.221), within a rotation relative to the support body (2.2), supplies a smaller number of signal periods than the second detector coil (2.222).

6. The rotary transducer according to one of claims 3 to 5, wherein, for generating angular position information, the evaluation element (2.23)
- can electronically process the voltage (U_{II}) induced in the first detector coil (2.221) in the second operating mode and, at the same time, the voltage (U_{II}) induced in the second detector coil (2.222) is ignorable for the electronic processing and
- the voltages (U_{I}) induced in the first detector coil (2.221) as well as in the second detector coil (2.222) can be processed electronically in the first operating mode.

7. The rotary transducer according to one of the preceding claims, wherein the exciter control element (2.23) and the evaluation element (2.23) are integrated into an ASIC component.

8. The rotary transducer according to one of the preceding claims, wherein the exciter control element (2.23) is embodied in such a manner that the second field current (I_{II}) can be generated as a pulsed current.

9. The rotary transducer according to one of the preceding claims, wherein the exciter control element (2.23) is embodied in such a manner that the second field current (I_{II}) encompasses current pauses.

10. The rotary transducer according to one of the preceding claims, wherein the rotary transducer encompasses a battery for the current supply of the rotary transducer in the second operating mode.

11. A method for operating a rotary transducer, which comprises
- a shaft (1.1),
- a support body (2.2) on which
• at least one exciter coil (2.21), through which a field current (I_{I}, I_{II}) is conducted for generating an electromagnetic field as well as
• at least one detector arrangement (2.22) for scanning the electromagnetic field, which is impacted by a code carrier (1.2), are arranged,
- an exciter control element(2.23) and
- an evaluation element (2.23), wherein
the shaft (1.1) is rotatable relative to the support body (2.2) and the code carrier (1.2) is fixed to the shaft (1.1) in a torque proof way for detecting the angular position thereof, comprising the following steps
• selecting a first or second operating mode,
• generating a field current (I_{I}, I_{II}) in the exciter coil (2.21) by means of the exciter control element (2.23), wherein a first field current (I_{I}) is generated in the first operating mode and a second field current (I_{II}) is generated in the second operating mode, wherein the second field current (I_{II}) is embodied in such a manner that the electrical current consumption of the rotary transducer in the second operating mode is less than in the first operating mode and
• detecting the voltage (U_{I}, U_{II}), which is induced in the detector arrangement (2.22) by means of the field current (I_{I}, I_{II}),
• electronic processing of the induced voltage (U_{II}, U_{I}) for generating angular position information.

12. The method according to claim 11, wherein the angular position information generated in the second operating mode encompasses a coarser resolution than the angular position information generated in the first operating mode.

13. The method according to claim 11 or 12, wherein the first or the second operating mode is selected as a function of the voltage (U_{B}, U_{C}) applied at the rotary transducer.

14. The method according to one of claims 11 to 13, wherein the second field current (I_{II}) is generated as a pulsed current.

15. The method according to one of claims 11 to 14, wherein the second field current (I_{II}) encompasses current pauses.

16. The method according to one of claims 11 to 15, wherein the second field current (I_{II}) is embodied in such a manner that the time lag (τ_{II}) between adjacent current maxima is at least 100 times greater than the time lag (τ_{I}) of adjacent current maxima of the first field current (I_{I}).

17. The method according to claim 16, wherein the second field current (I_{II}) is embodied in such a manner that the time lag (τ_{II}) between adjacent current maxima is at least 1000 times greater than the time lag (τ_{I}) of adjacent current maxima of the first field current (I_{I}).

18. The method according to one of claims 11 to 17, wherein the detector arrangement (2.22) comprises a first detector coil (2.221) and a second detector coil (2.222) and the first detector coil (2.221), within one rotation relative to the support body (2.2), supplies a number of signal periods, which is different as compared to the second detector coil (2.222)
- wherein the voltage (U_{II}) induced in the first detector coil (2.221) is electronically processed in the second operating mode and, at the same time, the voltage (U_{II}) induced in the second detector coil (2.222) is not considered by the electronic processing and
- the voltages (U_{I}) induced in the first detector coil (2.221) as well as in the second detector coil (2.222) can be processed electronically in the first operating mode.

19. The method according to one of claims 11 to 18, wherein the first field current (I_{I}) encompasses a higher maximum amplitude than the second field current (I_{II}).

## Revendications

1. Capteur de rotation comprenant
- un arbre (1.1),
- un corps de support (2.2), sur lequel sont disposés
• au moins un enroulement excitateur (2.21), par lequel un courant d'excitation (I_{I}, I_{II}) peut être conduit pour produire d'un champ électromagnétique, et
• au moins un dispositif détecteur (2.22) pour la détection du champ électromagnétique influencé par un support de codage (1.2),
- un élément de contrôle d'excitation (2.23) et
- un élément d'évaluation (2.23),
dans lequel l'arbre (1.1) est rotatif par rapport au corps de support (2.2) et le support de codage (1.2) est fixé de manière bloquée en rotation sur l'arbre (1.1), pour la détection de sa position d'angle,
dans lequel l'élément de contrôle d'excitation (2.23) est conçu de telle manière, que par celui-ci, l'enroulement excitateur (2.21) peut être actionné de façon sélective dans deux différents modes de fonctionnement, de sorte qu'un premier courant d'excitation (I_{I}) peut être produit dans le premier mode de fonctionnement et un deuxième courant d'excitation (I_{II}) peut être produit dans le deuxième mode de fonctionnement, le deuxième courant d'excitation (I_{II}) étant conçu de telle manière que la consommation électrique du capteur de rotation est plus faible dans le deuxième mode de fonctionnement que dans le premier mode de fonctionnement, et
chacun des courants d'excitation (I_{I}, I_{II}) induit des tensions (U_{I}, U_{II}) dans le dispositif détecteur (2.22), qui sont traitées électroniquement pour la production d'informations sur la position d'angle par l'élément d'évaluation (2.23).

2. Capteur de rotation selon la revendication 1, dans lequel l'information sur la position d'angle produite dans le deuxième mode de fonctionnement présente une résolution plus grossière que l'information sur la position d'angle produite dans le premier mode de fonctionnement.

3. Capteur de rotation selon l'une des revendications 1 ou 2, dans lequel le dispositif détecteur (2.22) comprend un premier enroulement de détecteur (2.221) et un deuxième enroulement de détecteur (2.222), et le premier enroulement de détecteur (2.221) fournit, dans une rotation par rapport au corps de support (2.2), un nombre de périodes de signal différent par rapport au deuxième enroulement de détecteur (2.222).

4. Capteur de rotation selon la revendication 3, dans lequel le premier enroulement de détecteur (2.221) fournit un nombre impair de périodes de signal.

5. Capteur de rotation selon la revendication 4, dans lequel le premier enroulement de détecteur (2.221) fournit, dans une rotation par rapport au corps de support (2.2), un plus petit nombre de périodes de signal que le deuxième enroulement de détecteur (2.222).

6. Capteur de rotation selon l'une des revendications 3 à 5, dans lequel, à partir de l'élément d'évaluation (2.23), pour la production d'informations sur la position d'angle,
- dans le deuxième mode de fonctionnement, la tension (U_{II}) induite dans le premier enroulement de détecteur (2.221) peut être traitée électroniquement et dans le même temps, la tension (U_{II}) induite dans le deuxième enroulement de détecteur (2.222) n'est pas prise en compte pour le traitement électronique, et
- dans le premier mode de fonctionnement, les tensions (U_{I}) induites aussi bien dans le premier enroulement de détecteur (2.221) que dans le deuxième enroulement de détecteur (2.222) peuvent être traitées électroniquement.

7. Capteur de rotation selon l'une des revendications précédentes, dans lequel l'élément de contrôle d'excitation (2.23) et l'élément d'évaluation (2.23) sont intégrés dans un module ASIC.

8. Capteur de rotation selon l'une des revendications précédentes, dans lequel l'élément de contrôle d'excitation (2.23) est conçu de telle manière, que le deuxième courant d'excitation (I_{II}) peut être produit en tant que courant pulsé.

9. Capteur de rotation selon l'une des revendications précédentes, dans lequel l'élément de contrôle d'excitation (2.23) est conçu de telle manière, que le deuxième courant d'excitation (I_{II}) présente des temps d'extinction.

10. Capteur de rotation selon l'une des revendications précédentes, dans lequel le capteur de rotation comporte une batterie pour l'alimentation en courant du capteur de rotation dans le deuxième mode de fonctionnement.

11. Procédé pour le fonctionnement d'un capteur de rotation, comportant
- un arbre (1.1),
- un corps de support (2.2), sur lequel sont disposés
• au moins un enroulement excitateur (2.21), par lequel un courant d'excitation (I_{I}, I_{II}) peut être conduit pour produire d'un champ électromagnétique, et
• au moins un dispositif détecteur (2.22) pour la détection du champ électromagnétique influencé par un support de codage (1.2),
- un élément de contrôle d'excitation (2.23) et
- un élément d'évaluation (2.23),
dans lequel l'arbre (1.1) est rotatif par rapport au corps de support (2.2) et le support de codage (1.2) est fixé de manière bloquée en rotation sur l'arbre (1.1), avec les étapes suivantes :
• Sélection d'un premier ou d'un deuxième mode de fonctionnement,
• Production d'un courant d'excitation (I_{I}, I_{II}) dans l'enroulement excitateur (2.21), à l'aide de l'élément de contrôle d'excitation (2.23), un premier courant d'excitation (I_{I}) étant produit dans le premier mode de fonctionnement et un deuxième courant d'excitation (I_{II}) étant produit dans le deuxième mode de fonctionnement, le deuxième courant d'excitation (I_{II}) étant conçu de telle façon, que la consommation électrique du capteur de rotation est plus faible dans le deuxième mode de fonctionnement que dans le premier mode de fonctionnement,
• Détection de la tension (U_{I}, U_{II}) induite dans le dispositif détecteur (2.22) par le courant d'excitation (I_{I}, I_{II}),
• Traitement électronique de la tension (U_{II}, U_{I}) induite pour la production d'informations de position d'angle.

12. Procédé selon la revendication 11, dans lequel l'information de position d'angle produite dans le deuxième mode de fonctionnement présente une résolution plus grossière que l'information de position d'angle produite dans le premier mode de fonctionnement.

13. Procédé selon l'une des revendications 11 ou 12, dans lequel le premier ou le deuxième mode de fonctionnement est sélectionné en fonction de la tension (U_{B}, U_{C}) appliquée au capteur de rotation.

14. Procédé selon l'une des revendications 11 à 13, dans lequel le deuxième courant d'excitation (I_{II}) est produit en tant que courant pulsé.

15. Procédé selon l'une des revendications 11 à 14, dans lequel le deuxième courant d'excitation (I_{II}) présente des temps d'extinction.

16. Procédé selon l'une des revendications 11 à 15, dans lequel le deuxième courant d'excitation (I_{II}) est conçu de telle manière, que l'écart temporel (τ_{II}) entre des courants maximums voisins est au moins 100 fois supérieur à l'écart temporel (τ_{I}) entre des courants maximums voisins du premier courant d'excitation (I_{I}).

17. Procédé selon la revendication 16, dans lequel le deuxième courant d'excitation (I_{II}) est conçu de telle manière, que l'écart temporel (τ_{II}) entre des courants maximums voisins est au moins 1000 fois supérieur à l'écart temporel (τ_{I}) entre des courants maximums voisins du premier courant d'excitation (I_{I}).

18. Procédé selon l'une des revendications 11 à 17, dans lequel le dispositif détecteur (2.22) comprend un premier enroulement de détecteur (2.221) et un deuxième enroulement de détecteur (2.222), et le premier enroulement de détecteur (2.221) fournit, dans une rotation par rapport au corps de support (2.2), un nombre de périodes de signal différent par rapport au deuxième enroulement de détecteur (2.222), dans lequel
- dans le deuxième mode de fonctionnement, la tension (U_{II}) induite dans le premier enroulement de détecteur (2.221) est traitée électroniquement et dans le même temps, la tension (U_{II}) induite dans le deuxième enroulement de détecteur (2.222) n'est pas prise en compte pour le traitement électronique, et
- dans le premier mode de fonctionnement, les tensions (U_{I}) induites aussi bien dans le premier enroulement de détecteur (2.221) que dans le deuxième enroulement de détecteur (2.222) peuvent être traitées électroniquement.

19. Procédé selon l'une des revendications 11 à 18, dans lequel le premier courant d'excitation (I_{I}) présente une amplitude maximale supérieure à celle du deuxième courant d'excitation (I_{II}).
